# EUROPEAN PATENT SPECIFICATION

(11) **EP 3 073 203 B1**
(45) Date of publication and mention of the grant of the patent: **23.10.2019**
(21) Application number: 14854940.5
(22) Date of filing: 10.09.2014
(51) Int. Cl.: F24F 110/52, F24F 11/83, F25B 49/02, F25B 49/00, F24F 3/14

(54) **METHOD AND DEVICE FOR CONTROLLING COOLANT IN DEHUMIDIFIER**
VERFAHREN UND VORRICHTUNG ZUR STEUERUNG EINES KÜHLMITTELS IN EINEM ENTFEUCHTER
PROCÉDÉ ET DISPOSITIF POUR COMMANDER UN CALOPORTEUR DANS UN DÉSHUMIDIFICATEUR

(30) Priority: 23.10.2013 CN 201310505303
(43) Date of publication of application: 28.09.2016
(73) Proprietor: Gree Electric Appliances, Inc. of Zhuhai, Qianshan Zhuhai Guangdong 519070 (CN)
(72) Inventor: LIU, Wei, Zhuhai Guangdong 519070 (CN); LIANG, Yongchao, Zhuhai Guangdong 519070 (CN); LI, Peili, Zhuhai Guangdong 519070 (CN); YU, Ding, Zhuhai Guangdong 519070 (CN); GAO, Yuping, Zhuhai Guangdong 519070 (CN); CHEN, Pengyu, Zhuhai Guangdong 519070 (CN); LUO, Yonghong, Zhuhai Guangdong 519070 (CN); CHEN, Zuqing, Zhuhai Guangdong 519070 (CN); PENG, Qiyang, Zhuhai Guangdong 519070 (CN); WANG, Chun, Zhuhai Guangdong 519070 (CN); YANG, Jianqun, Zhuhai Guangdong 519070 (CN)
(74) Representative: Zacco GmbH
(86) International application number: PCT/CN2014/086245
(87) International publication number: WO 2015/058592

(56) References cited:
- CN-A- 1 755 341
- CN-A- 101 566 517
- CN-A- 101 813 357
- CN-A- 101 813 357
- JP-A- 2003 090 582
- JP-A- 2007 333 219
- JP-B2- 4 606 394
- JP-B2- 4 990 702

## Description

### Technical field of the invention

The invention relates to the field of dehumidifier control, and in particular to a refrigerant control method and apparatus for a dehumidifier.

### Background of the invention

All conventional technical solutions for reporting refrigerant shortage are aimed at air conditioners instead of dehumidifiers, and the air conditioners and the dehumidifiers are greatly different in system running mode and structural arrangement. For example, a fluorine shortage control method for a cooling/heating cabinet machine of a certain company may be set as follows. Firstly, a temperature difference between an inner tube temperature and an inner loop temperature during starting is judged, wherein it is guaranteed that an air conditioner is normally started. Secondly, different fluorine shortage determination parameter ranges are determined by means of the inner loop temperature and an outer tube temperature. Thirdly, a difference between the inner tube temperature or the outer tube temperature and an environment temperature is continuously detected after the air conditioner has been started for a period of time, and if the difference reaches a certain difference range, a fluorine shortage fault is reported. Since heat exchangers of the dehumidifiers are located indoors and only evaporators are provided with temperature sensing bulbs, the technical solutions for reporting refrigerant shortage, applicable to the air conditioners, are not applicable to the dehumidifiers.

The dehumidifiers on the current market cannot intelligently recognize the leakage of a system refrigerant and cannot report a refrigerant leakage fault in time, thereby causing a potential safety hazard.

An effective solution has not been proposed for the problems currently.

D1 (CN 101813357 A1) provides respective technical solution; however, the above mentioned problem still remains unsolved.

This document D1 discloses a refrigerant control method for an air handling unit, comprising: detecting an environment temperature and an evaporator tube temperature of said air conditioner; judging whether the air conditioner has a refrigerant fault according to said temperatures.

This document D1 also discloses: a refrigerant control apparatus suitable for a dehumidifier, comprising: a first temperature detection module, configured to detect an environment temperature and an evaporator tube temperature of a dehumidifier; a fault obtaining module, configured to judge whether the dehumidifier has a refrigerant fault according to the environment temperature and an evaporator tube temperature.

### Summary of the invention

The embodiments of the invention provide a refrigerant control method and apparatus for a dehumidifier, which are intended to at least solve the technical problems that a dehumidifier cannot intelligently recognize the leakage of a system refrigerant and cannot report a refrigerant leakage fault in time, thereby causing a potential safety hazard.

According to one aspect of the embodiments of the invention, a refrigerant control method for a dehumidifier is provided, which may include that: an environment temperature and an evaporator tube temperature of a dehumidifier are detected; according to the environment temperature and the evaporator tube temperature, a refrigerant leakage amount of the dehumidifier is obtained; and according to the refrigerant leakage amount, it is judged whether the dehumidifier has a refrigerant fault.

Furthermore, the step that the refrigerant leakage amount of the dehumidifier is obtained according to the environment temperature and the evaporator tube temperature may include that: a difference between the environment temperature and the evaporator tube temperature is calculated; and the refrigerant leakage amount corresponding to the difference is obtained.

Furthermore, the step that a refrigerant fault parameter of the dehumidifier is obtained according to the refrigerant leakage amount may include that: a dehumidification ability parameter of the dehumidifier, corresponding to the refrigerant leakage amount, is read from a pre-set database; it is detected whether the dehumidification ability parameter within a pre-set dehumidification ability range; and under the condition that the dehumidification ability parameter does not within the pre-set dehumidification ability range, it is determined that the refrigerant of the dehumidifier is faulty.

Furthermore, after it is detected whether the dehumidification ability parameter within the pre-set dehumidification ability range, the method may further include that: under the condition that the dehumidification ability parameter within the pre-set dehumidification ability range, an exhaust temperature of the dehumidifier is collected; it is detected whether the exhaust temperature within a pre-set temperature range; under the condition that the exhaust temperature does not within the pre-set temperature range, it is determined that the refrigerant of the dehumidifier is faulty; and under the condition that the exhaust temperature within the pre-set temperature range, it is determined that the refrigerant of the dehumidifier is normal.

Furthermore, the step that the environment temperature and the evaporator tube temperature of the dehumidifier are detected may include that: after the dehumidifier is started, a timer is started, and starting time of the dehumidifier is recorded; it is detected whether the starting time within a pre-set time range; under the condition that the starting time within the pre-set time range, the environment temperature and the evaporator tube temperature of the dehumidifier are detected; and under the condition that the starting time does not within the pre-set time range, the starting time is continuously recorded.

Furthermore, after it is judged whether the dehumidifier has the refrigerant fault according to the refrigerant leakage amount, the method may further include that: under the condition that the dehumidifier does not have the refrigerant fault, a controller does not report the refrigerant fault and controls the dehumidifier to continuously run; and under the condition that the dehumidifier has the refrigerant fault, the controller gives a refrigerant fault alarm, and/or the controller controls the dehumidifier to stop.

According to another aspect of the embodiments of the invention, a refrigerant control apparatus for a dehumidifier is provided, which may include: a first temperature detection module, configured to detect an environment temperature and an evaporator tube temperature of a dehumidifier; a data obtaining module, configured to obtain a refrigerant leakage amount of the dehumidifier according to the environment temperature and the evaporator tube temperature; and a fault obtaining module, configured to judge whether the dehumidifier has a refrigerant fault according to the refrigerant leakage amount.

Furthermore, the data obtaining module may include: a calculation module, configured to calculate a difference between the environment temperature and the evaporator tube temperature; and an obtaining sub-module, configured to obtain the refrigerant leakage amount corresponding to the difference.

Furthermore, the fault obtaining module may include: a reading module, configured to read a dehumidification ability parameter of the dehumidifier, corresponding to the refrigerant leakage amount, from a pre-set database; a dehumidification detection module, configured to detect whether the dehumidification ability parameter within a pre-set dehumidification ability range; and a first fault obtaining sub-module, configured to determine that the refrigerant of the dehumidifier is faulty under the condition that the dehumidification ability parameter does not within the pre-set dehumidification ability range.

Furthermore, the apparatus may further include: a collection module, configured to collect an exhaust temperature of the dehumidifier under the condition that the dehumidification ability parameter within the pre-set dehumidification ability range; a second temperature detection module, configured to detect whether the exhaust temperature within a pre-set temperature range; a second fault obtaining sub-module, configured to determine that the refrigerant of the dehumidifier is faulty under the condition that the exhaust temperature does not within the pre-set temperature range; and a third fault obtaining sub-module, configured to determine that the refrigerant of the dehumidifier is normal under the condition that the exhaust temperature within the pre-set temperature range.

Furthermore, the first temperature detection module may include: a first recording module, configured to start a timer after the dehumidifier is started and record starting time of the dehumidifier; a time detection module, configured to detect whether the starting time within a pre-set time range; a third temperature detection module, configured to detect the environment temperature and the evaporator tube temperature of the dehumidifier under the condition that the starting time within the pre-set time range; and a second recording module, configured to continuously record the starting time under the condition that the starting time does not within the pre-set time range.

Furthermore, the refrigerant control apparatus may further include: a continuous running module, configured to control the dehumidifier to continuously run by a controller without reporting of the refrigerant fault under the condition that the dehumidifier does not have the refrigerant fault; and an alarming and stopping module, configured to give a refrigerant fault alarm by the controller and/or control the dehumidifier to stop by the controller under the condition that the dehumidifier has the refrigerant fault.

In the embodiments of the invention, by means of the invention, the first temperature detection module detects the environment temperature and the evaporator tube temperature of the dehumidifier, and the data obtaining module and the fault obtaining module judge whether the dehumidifier has the refrigerant fault according to the environment temperature and the evaporator tube temperature, so that the effect of intelligently recognizing the refrigerant fault of the dehumidifier is achieved, and it can be determined whether it is necessary to report the refrigerant fault parameter of the refrigerant leakage fault according to the recognized refrigerant leakage amount, thereby solving the technical problems in the conventional art that the dehumidifier cannot intelligently recognize the leakage of the system refrigerant and cannot report the refrigerant leakage fault in time so as to cause the potential safety hazard. The effects of intelligently recognizing the refrigerant leakage amount of the dehumidifier and reporting the refrigerant fault in time are achieved, a series of reliability faults and potential safety hazards probably caused to a product during the shortage of the system refrigerant are effectively reduced, and the reliability and safety of the product are improved. The functions of the product are optimized, so that the product is more humanized and can be used more safely and reliably.

### Brief description of the drawings

The drawings described here are intended to provide further understanding of the invention, and form a part of the invention. The schematic embodiments and descriptions of the invention are intended to explain the invention, and do not form improper limits to the invention. In the drawings:
Fig. 1 is a diagram of an apparatus for controlling a dehumidifier according to an embodiment of the invention; and
Fig. 2 is a flowchart of a method for controlling a dehumidifier according to an embodiment of the invention.

### Detailed description of the embodiments

In order to make those skilled in the art better understand the solutions of the invention, the technical solutions in the embodiments of the invention are clearly and completely described below with reference to the drawings in the embodiments of the invention. Obviously, the described embodiments are only a part of the embodiments of the invention, not all of the embodiments. On the basis of the embodiments of the invention, all other embodiments obtained on the premise of no creative work of those skilled in the art shall fall within the protection scope of the invention.

It is important to note that the description and claims of the invention and terms "first", "second" and the like in the drawings are intended to distinguish similar objects, and do not need to describe a specific sequence or a precedence order. It should be understood that data used in such a way can be exchanged under appropriate conditions, in order that the embodiments of the invention described here can be implemented in a sequence except sequences graphically shown or described here. In addition, terms "include" and "have" and any inflexions thereof are intended to cover non-exclusive inclusions. For example, it is not limited for processes, methods, systems, products or devices containing a series of steps or units to clearly show those steps or units, and other steps or units which are not clearly shown or are inherent to these processes, methods, products or devices may be included instead.

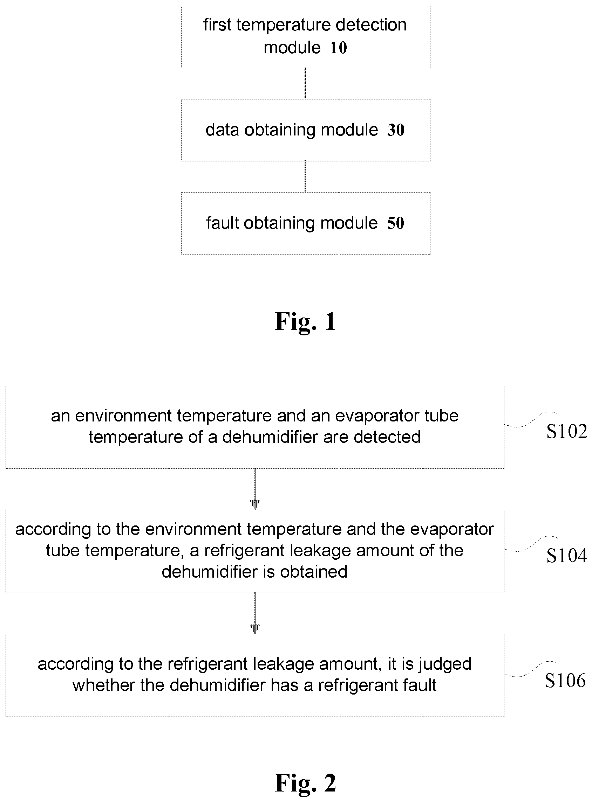

According to an embodiment of the invention, a refrigerant control apparatus for a dehumidifier is provided. As shown in Fig. 1, the apparatus may include: a first temperature detection module 10, configured to detect an environment temperature and an evaporator tube temperature of a dehumidifier; a data obtaining module 30, configured to obtain a refrigerant leakage amount of the dehumidifier according to the environment temperature and the evaporator tube temperature; and a fault obtaining module 50, configured to judge whether the dehumidifier has a refrigerant fault according to the refrigerant leakage amount.

By means of the invention, the first temperature detection module detects the environment temperature and the evaporator tube temperature of the dehumidifier, and the data obtaining module and the fault obtaining module judge whether the dehumidifier has the refrigerant fault according to the environment temperature and the evaporator tube temperature, so that the effect of intelligently recognizing the refrigerant fault of the dehumidifier is achieved, and it can be determined whether it is necessary to report a refrigerant fault parameter of a refrigerant leakage fault according to the recognized refrigerant leakage amount, thereby solving the technical problems in the conventional art that the dehumidifier cannot intelligently recognize the leakage of a system refrigerant and cannot report the refrigerant leakage fault in time so as to cause the potential safety hazard. The effects of intelligently recognizing the refrigerant leakage amount of the dehumidifier and reporting the refrigerant fault in time are achieved, a series of reliability faults and potential safety hazards probably caused to a product during the shortage of the system refrigerant are effectively reduced, and the reliability and safety of the product are improved. The functions of the product are optimized, so that the product is more humanized and can be used more safely and reliably.

In the embodiment of the invention, the data obtaining module 30 includes: a calculation module, configured to calculate a difference between the environment temperature and the evaporator tube temperature; and an obtaining sub-module, configured to obtain the refrigerant leakage amount corresponding to the difference.

Furthermore, the fault obtaining module 70 may include: a reading module, configured to read a dehumidification ability parameter of the dehumidifier, corresponding to the refrigerant leakage amount, from a pre-set database; a dehumidification detection module, configured to detect whether the dehumidification ability parameter within a pre-set dehumidification ability range; and a first fault obtaining sub-module, configured to determine that the refrigerant of the dehumidifier is faulty under the condition that the dehumidification ability parameter does not within the pre-set dehumidification ability range.

Wherein, the dehumidification ability parameter may be a parameter representative of a dehumidification ability of the dehumidifier by percentage.

In the embodiment of the invention, the apparatus may further include: a collection module, configured to collect an exhaust temperature of the dehumidifier under the condition that the dehumidification ability parameter within the pre-set dehumidification ability range; a second temperature detection module, configured to detect whether the exhaust temperature within a pre-set temperature range; a second fault obtaining sub-module, configured to determine that the refrigerant of the dehumidifier is faulty under the condition that the exhaust temperature does not within the pre-set temperature range; and a third fault obtaining sub-module, configured to determine that the refrigerant of the dehumidifier is normal under the condition that the exhaust temperature within the pre-set temperature range. In the embodiment, the pre-set temperature range refers to an exhaust temperature capable of ensuring that the dehumidifier works normally, and the pre-set temperature range may be greater than 110 DEG C.

Wherein, the pre-set dehumidification ability range in the embodiment may be 0-70%. When the refrigerant allowance of the dehumidifier is less than 70%, the exhaust temperature of a system rises highly (the temperature exceeds an allowed running range of the specification of a compressor and reaches 110 DEG C under relatively-severe working conditions. At this time, the dehumidification amount is low, and the compressor is prone to frequent overload protection, thereby even causing the potential safety hazard.

Furthermore, the refrigerant control apparatus may further include: a continuous running module, configured to control the dehumidifier to continuously run by a controller without reporting of the refrigerant fault under the condition that the dehumidifier does not have the refrigerant fault; and an alarming and stopping module, configured to give a refrigerant fault alarm by the controller and/or control the dehumidifier to stop by the controller under the condition that the dehumidifier has the refrigerant fault.

Specifically, Table 1 shows a corresponding relationship among the difference, the refrigerant leakage amount and the dehumidification ability parameter.

More specifically, Table 1 shows different refrigerant leakage amounts corresponding to the difference range between the environment temperature and the evaporator tube temperature, different temperature differences correspond to different residual refrigerant amounts, and the controller judges whether it is necessary to report the refrigerant leakage fault according to the refrigerant leakage amount. Specifically, the continuous running module does not report any faults in case of non-obvious influence on the dehumidification ability of the system (namely, any faults are not reported in case of conformation to the pre-set dehumidification ability range in the embodiment so as to ensure a minimum refrigerant amount of over 70% of a dehumidification amount under rated working conditions of the dehumidifier); and under the condition that the dehumidification ability of the system is greatly reduced or the exhaust temperature of the compressor is over-high so as to exceed an allowed maximum compressor running exhaust temperature value of the specification of the compressor, the alarming and stopping module reports the refrigerant leakage fault in time and performs stop protection in the presence of the potential safety hazard (namely under the condition that the dehumidifier has the refrigerant fault in the embodiment).

**Table 1**

| Difference | Refrigerant leakage amount | Dehumidification ability parameter |
|---|---|---|
| 2 DEG C | 50% | Less than 50% |
| 3 DEG C | 70% | |
| 4 DEG C | 75% | 50-70% |
| 5 DEG C | 80% | |
| 6 DEG C | 85% | 70-80% |
| 7 DEG C | 90% | |
| 8 DEG C | 100% | 80-100% |
| 10 DEG C | 100% | |
| 100% | 100% | 100% |

Specifically, the first temperature detection module 10 may include: a first recording module, configured to start a timer after the dehumidifier is started and record starting time of the dehumidifier; a time detection module, configured to detect whether the starting time within a pre-set time range; a third temperature detection module, configured to detect the environment temperature and the evaporator tube temperature of the dehumidifier under the condition that the starting time within the pre-set time range; and a second recording module, configured to continuously record the starting time under the condition that the starting time does not within the pre-set time range.

In the embodiment of the invention, the pre-set time range may be 8 or 9 minutes.

In the embodiment of the invention, the dehumidifier monitors a system refrigerant amount in real time, intelligently recognizes whether the system refrigerant leaks, and calculates and obtains a system refrigerant leakage amount when recognizing that the system refrigerant leaks (in the embodiment of the invention, the refrigerant leakage mount corresponding to the difference can be read from the pre-set database).

According to an embodiment of the invention, a refrigerant control method for a dehumidifier is provided. As shown in Fig. 2, the method may include the steps as follows.

Step S102: An environment temperature and an evaporator tube temperature of a dehumidifier are detected.

Step S104: According to the environment temperature and the evaporator tube temperature, a refrigerant leakage amount of the dehumidifier is obtained.

Step S106: According to the refrigerant leakage amount, it is judged whether the dehumidifier has a refrigerant fault.

By means of the invention, a first temperature detection module detects the environment temperature and the evaporator tube temperature of the dehumidifier, and a data obtaining module and a fault obtaining module judge whether the dehumidifier has the refrigerant fault according to the environment temperature and the evaporator tube temperature, so that the effect of intelligently recognizing the refrigerant fault of the dehumidifier is achieved, and it can be determined whether it is necessary to report a refrigerant fault parameter of a refrigerant leakage fault according to the recognized refrigerant leakage amount, thereby solving the technical problems in the conventional art that the dehumidifier cannot intelligently recognize the leakage of a system refrigerant and cannot report the refrigerant leakage fault in time so as to cause the potential safety hazard. The effects of intelligently recognizing the refrigerant leakage amount of the dehumidifier and reporting the refrigerant fault in time are achieved, a series of reliability faults and potential safety hazards probably caused to a product during the shortage of the system refrigerant are effectively reduced, and the reliability and safety of the product are improved. The functions of the product are optimized, so that the product is more humanized and can be used more safely and reliably.

Wherein, in the step that the environment temperature and the evaporator tube temperature of the dehumidifier in the embodiment, the temperatures can be collected and detected via a temperature sensor.

In the embodiment of the invention, the step that the refrigerant leakage amount of the dehumidifier is obtained according to the environment temperature and the evaporator tube temperature includes that: a difference between the environment temperature and the evaporator tube temperature is calculated; and the refrigerant leakage amount corresponding to the difference is obtained.

Specifically, the step that a refrigerant fault parameter of the dehumidifier is obtained according to the refrigerant leakage amount may include that: a dehumidification ability parameter of the dehumidifier, corresponding to the refrigerant leakage amount, is read from a pre-set database; it is detected whether the dehumidification ability parameter within a pre-set dehumidification ability range; and under the condition that the dehumidification ability parameter does not within the pre-set dehumidification ability range, it is determined that the refrigerant of the dehumidifier is faulty.

Wherein, the dehumidification ability parameter may be a parameter representative of a dehumidification ability of the dehumidifier by percentage.

According to the embodiment of the invention, after it is detected whether the dehumidification ability parameter within the pre-set dehumidification ability range, the method may further include that: under the condition that the dehumidification ability parameter within the pre-set dehumidification ability range, an exhaust temperature of the dehumidifier is collected; it is detected whether the exhaust temperature within a pre-set temperature range; under the condition that the exhaust temperature does not within the pre-set temperature range, it is determined that the refrigerant of the dehumidifier is faulty; and under the condition that the exhaust temperature within the pre-set temperature range, it is determined that the refrigerant of the dehumidifier is normal.

Furthermore, the step that the environment temperature and the evaporator tube temperature of the dehumidifier are detected includes that: after the dehumidifier is started, a timer is started, and starting time of the dehumidifier is recorded; it is detected whether the starting time within a pre-set time range; under the condition that the starting time within the pre-set time range, the environment temperature and the evaporator tube temperature of the dehumidifier are detected; and under the condition that the starting time does not within the pre-set time range, the starting time is continuously recorded.

In the embodiment of the invention, after it is judged whether the dehumidifier has the refrigerant fault according to the refrigerant leakage amount, the method may further include that: under the condition that the dehumidifier does not have the refrigerant fault, a controller does not report the refrigerant fault and controls the dehumidifier to continuously run; and under the condition that the dehumidifier has the refrigerant fault, the controller gives a refrigerant fault alarm, and/or the controller controls the dehumidifier to stop.

Specifically, an implementation mode that the controller judges whether it is necessary to report the refrigerant leakage fault according to the recognized refrigerant leakage amount is as follows. After recognizing the shortage of the system refrigerant (the refrigerant leakage amount of the dehumidifier is greater than a pre-set value), the dehumidifier calculates and obtains the dehumidification ability of the dehumidifier (namely the dehumidification ability parameter in the embodiment), and monitors the exhaust temperature of a compressor. If the dehumidification ability and the exhaust temperature of the compressor are both within a normal value range (it is ensured that the dehumidification amount of the dehumidifier is greater than 70% under rated working conditions and the exhaust temperature is lower than an allowed maximum compressor running exhaust temperature value of the specification of the compressor), the controller does not report any faults, and the dehumidifier continuously runs; and if the dehumidification ability is greatly reduced (the dehumidification amount of the dehumidifier is less than 70% under the rated working conditions) or the exhaust temperature of the compressor is over-high, the controller reports the refrigerant leakage fault and performs stop protection.

It is important to note that in order to simply describe each of the method embodiments, the embodiment is expressed as a series of motion combinations. However, those skilled in the art should know that the invention is not limited by a described motion sequence, since certain steps can be carried out in other sequences or at the same time according to the invention. Secondly, those skilled in the art should also know that the embodiments described in the description belong to preferred embodiments, and involved motions and modules may not be necessities for the invention.

By means of the descriptions of the implementation mode, those skilled in the art can clearly know that the method according to the embodiment can be realized by means of software and a necessary general hardware platform. Certainly, the method can also be realized by means of hardware. However, the former is a better implementation mode under many conditions. Based on this understanding, the technical solutions of the invention can be substantially embodied in a form of a software product or parts contributing to the conventional art can be embodied in a form of a software product, and the computer software product is stored in a storage medium such as a Read-Only Memory (ROM)/Random Access Memory (RAM), a magnetic disk and an optical disc, including a plurality of instructions enabling a terminal device which may be a mobile phone, a computer, a server or a network device to execute the method according to each embodiment of the invention.

From the embodiments of the invention, it can be known that the invention achieves the following technical effects that: the dehumidifier intelligently recognizes the refrigerant leakage amount after the system refrigerant leaks; the controller judges whether it is necessary to report the refrigerant leakage fault according to the recognized refrigerant leakage amount; and any faults are not reported in case of non-obvious influence on the dehumidification ability of the system, and the refrigerant leakage fault is reported in time when the dehumidification ability of the system is greatly reduced or the exhaust temperature of the compressor is over-high so as to cause the potential safety hazard.

The sequence number of the embodiments of the invention is only used for descriptions and is not representative of a preference order of the embodiments.

In the embodiments of the invention, the description of each embodiment is emphasized. A part which is not described in detail in a certain embodiment can refer to relevant descriptions of the other embodiments.

All function units in all embodiments of the invention can be integrated in a processing unit. Each unit can exist individually and physically, or two or more units can be integrated in a unit. The integrated unit can be realized in a form of hardware or can be realized in a form of a software function unit.

If the integrated unit is realized in a form of the software function unit or is sold or used as an independent product, the integrated unit can be stored in a computer readable storage medium. Based on this understanding, the technical solutions of the invention can be substantially embodied in a form of a software product, or parts contributing to the conventional art or all or some of the technical solutions can be embodied in a form of a software product, and the computer software product is stored in a storage medium, including a plurality of instructions enabling a computer device which may be a personal computer, a server or a network device to execute all or some of the steps of the method according to each embodiment of the invention. The storage medium includes: various media capable of storing program codes, such as a U disk, an ROM, an RAM, a mobile hard disk, a magnetic disk or an optical disc.

The above is only preferred implementation modes of the invention. It should be pointed out that those skilled in the art can also make some improvements and modifications without departing from the principle of the invention. These improvements and modifications should fall within the protection scope of the invention.

## Claims

1. A refrigerant control method for a dehumidifier, comprising:
detecting an environment temperature and an evaporator tube temperature of a dehumidifier (S102);
obtaining a refrigerant leakage amount of the dehumidifier according to the environment temperature and the evaporator tube temperature (S104); and
judging whether the dehumidifier has a refrigerant fault according to the refrigerant leakage amount (S106);
wherein
judging whether the dehumidifier has the refrigerant fault according to the refrigerant leakage amount comprises:
reading a dehumidification ability parameter of the dehumidifier, corresponding to the refrigerant leakage amount, from a pre-set database;
detecting whether the dehumidification ability parameter is within a pre-set dehumidification ability range; and
determining that the refrigerant of the dehumidifier is faulty under the condition that the dehumidification ability parameter is not within the pre-set dehumidification ability range.

2. The refrigerant control method according to claim 1, wherein obtaining the refrigerant leakage amount of the dehumidifier according to the environment temperature and the evaporator tube temperature (S104) comprises:
calculating a difference between the environment temperature and the evaporator tube temperature; and
obtaining the refrigerant leakage amount corresponding to the difference.

3. The refrigerant control method according to claim 1, wherein after it is detected whether the dehumidification ability parameter within the pre-set dehumidification ability range, the method further comprises:
collecting an exhaust temperature of the dehumidifier under a condition that the dehumidification ability parameter within the pre-set dehumidification ability range;
detecting whether the exhaust temperature within a pre-set temperature range;
determining that the refrigerant of the dehumidifier is faulty under the condition that the exhaust temperature does not within the pre-set temperature range; and
determining that the refrigerant of the dehumidifier is normal under the condition that the exhaust temperature within the pre-set temperature range.

4. The refrigerant control method according to claim 1, wherein detecting the environment temperature and the evaporator tube temperature of the dehumidifier (S102) comprises:
starting a timer after the dehumidifier is started, and recording starting time of the dehumidifier;
detecting whether the starting time within a pre-set time range;
detecting the environment temperature and the evaporator tube temperature of the dehumidifier under the condition that the starting time within the pre-set time range; and
continuously recording the starting time under the condition that the starting time does not within the pre-set time range.

5. The refrigerant control method according to any one of claims 1 to 4, wherein after it is judged whether the dehumidifier has the refrigerant fault according to the refrigerant leakage amount, the method further comprises:
not reporting, by a controller, the refrigerant fault and controlling the dehumidifier to continuously run under the condition that the dehumidifier does not have the refrigerant fault; and
giving, by the controller, a refrigerant fault alarm, and/or controlling, by the controller, the dehumidifier to stop under the condition that the dehumidifier has the refrigerant fault.

6. A refrigerant control apparatus for a dehumidifier, comprising:
a first temperature detection module (10), configured to detect an environment temperature and an evaporator tube temperature of a dehumidifier;
a data obtaining module (30), configured to obtain a refrigerant leakage amount of the dehumidifier according to the environment temperature and the evaporator tube temperature; and
a fault obtaining module (50), configured to judge whether the dehumidifier has a refrigerant fault according to the refrigerant leakage amount;
wherein
the fault obtaining module (50) comprises:
a reading module, configured to read a dehumidification ability parameter of the dehumidifier, corresponding to the refrigerant leakage amount, from a pre-set database;
a dehumidification detection module, configured to detect whether the dehumidification ability parameter is within a pre-set dehumidification ability range; and
a first fault obtaining sub-module, configured to determine that the refrigerant of the dehumidifier is faulty under the condition that the dehumidification ability parameter is not within the pre-set dehumidification ability range.

7. The refrigerant control apparatus according to claim 6, wherein the data obtaining module (30) comprises:
a calculation module, configured to calculate a difference between the environment temperature and the evaporator tube temperature; and
an obtaining sub-module, configured to obtain the refrigerant leakage amount corresponding to the difference.

8. The refrigerant control apparatus according to claim 6, further comprising:
a collection module, configured to collect an exhaust temperature of the dehumidifier under the condition that the dehumidification ability parameter within the pre-set dehumidification ability range;
a second temperature detection module, configured to detect whether the exhaust temperature within a pre-set temperature range;
a second fault obtaining sub-module, configured to determine that the refrigerant of the dehumidifier is faulty under the condition that the exhaust temperature does not within the pre-set temperature range; and
a third fault obtaining sub-module, configured to determine that the refrigerant of the dehumidifier is normal under the condition that the exhaust temperature within the pre-set temperature range.

9. The refrigerant control apparatus according to claim 6, wherein the first temperature detection module (10) comprises:
a first recording module, configured to start a timer after the dehumidifier is started and record starting time of the dehumidifier;
a time detection module, configured to detect whether the starting time within a pre-set time range;
a third temperature detection module, configured to detect the environment temperature and the evaporator tube temperature of the dehumidifier under the condition that the starting time within the pre-set time range; and
a second recording module, configured to continuously record the starting time under the condition that the starting time does not within the pre-set time range.

10. The refrigerant control apparatus according to any one of claims 6 to 9, further comprising:
a continuous running module, configured to control the dehumidifier to continuously run by a controller without reporting of the refrigerant fault under the condition that the dehumidifier does not have the refrigerant fault; and
an alarming and stopping module, configured to give a refrigerant fault alarm by the controller and/or control the dehumidifier to stop by the controller under the condition that the dehumidifier has the refrigerant fault.

## Patentansprüche

1. Verfahren zur Steuerung eines Kältemittels für einen Entfeuchter, umfassend:
Erfassung einer Umgebungstemperatur und einer Verdampferrohrtemperatur eines Entfeuchters (S102);
Erhalten einer Kältemittelleckagemenge des Entfeuchters gemäß der Umgebungstemperatur und der Verdampferrohrtemperatur (S104); und
Beurteilen, ob der Entfeuchter gemäß der Kältemittelleckagemenge (S106) einen Kältemittelfehler aufweist;
wobei
das Beurteilen, ob der Entfeuchter gemäß der Kältemittelleckagemenge den Kältemittelfehler aufweist, umfasst:
Lesen eines der Kältemittelleckagemenge entsprechenden Entfeuchtungsfähigkeitsparameters des Entfeuchters aus einer vorgegebenen Datenbank;
Erfassung, ob der Entfeuchtungsfähigkeitsparameter innerhalb eines vorgegebenen Entfeuchtungsfähigkeitsbereichs liegt; und
Bestimmen, dass das Kältemittel des Entfeuchters fehlerhaft ist, unter der Bedingung, dass der Entfeuchtungsfähigkeitsparameter nicht innerhalb des vorgegebenen Entfeuchtungsfähigkeitsbereichs liegt.

2. Verfahren zur Steuerung eines Kältemittels nach Anspruch 1, wobei das Erhalten der Kältemittelleckagemenge des Entfeuchters gemäß der Umgebungstemperatur und der Verdampferrohrtemperatur (S104) umfasst:
Berechnung eines Unterschieds zwischen der Umgebungstemperatur und der Verdampferrohrtemperatur; und
Erhalten der dem Unterschied entsprechenden Kältemittelleckagemenge.

3. Verfahren zur Steuerung eines Kältemittels nach Anspruch 1, wobei, nachdem erfasst wurde, ob der Entfeuchtungsfähigkeitsparameter innerhalb des vorgegebenen Entfeuchtungsfähigkeitsbereichs liegt, das Verfahren ferner umfasst:
Sammeln einer Abgastemperatur des Entfeuchters, unter der Bedingung, dass der Entfeuchtungsfähigkeitsparameter innerhalb des vorgegebenen Entfeuchtungsfähigkeitsbereichs liegt;
Erfassung, ob die Abgastemperatur innerhalb eines vorgegebenen Temperaturbereichs liegt;
Bestimmen, dass das Kältemittel des Entfeuchters fehlerhaft ist, unter der Bedingung, dass die Abgastemperatur nicht innerhalb des vorgegebenen Temperaturbereichs liegt; und
Bestimmen, dass das Kältemittel des Entfeuchters normal ist, unter der Bedingung, dass die Abgastemperatur innerhalb des vorgegebenen Temperaturbereichs liegt.

4. Verfahren zur Steuerung eines Kältemittels nach Anspruch 1, wobei die Erfassung der Umgebungstemperatur und der Verdampferrohrtemperatur des Entfeuchters (S102) umfasst:
Starten eines Zeitgebers nach dem Starten des Entfeuchters und Aufzeichnung der Startzeit des Entfeuchters;
Erfassung, ob die Startzeit innerhalb eines vorgegebenen Zeitbereichs liegt;
Erfassung der Umgebungstemperatur und der Verdampferrohrtemperatur des Entfeuchters, unter der Bedingung, dass die Startzeit innerhalb des vorgegebenen Zeitbereichs liegt; und
Daueraufzeichnung der Startzeit, unter der Bedingung, dass die Startzeit nicht innerhalb des vorgegebenen Zeitbereichs liegt.

5. Verfahren zur Steuerung eines Kältemittels nach einem der Ansprüche 1 bis 4, wobei, nachdem beurteilt wurde, ob der Entfeuchter gemäß der Kältemittelleckagemenge den Kältemittelfehler aufweist, das Verfahren ferner umfasst:
Nichtmeldung des Kältemittelfehlers durch eine Steuereinheit und Steuerung des Entfeuchters derart, dass er im Dauerbetrieb ist, unter der Bedingung, dass der Entfeuchter den Kältemittelfehler nicht aufweist; und
Ausgabe eines Kältemittelfehleralarms durch die Steuereinheit und/oder Steuerung des Entfeuchters durch die Steuereinheit derart, dass er stoppt, unter der Bedingung, dass der Entfeuchter den Kältemittelfehler aufweist.

6. Vorrichtung zur Steuerung eines Kältemittels für einen Entfeuchter, umfassend:
ein erstes Temperaturerfassungsmodul (10), das ausgelegt ist, um eine Umgebungstemperatur und eine Verdampferrohrtemperatur eines Entfeuchters zu erfassen;
ein Datenerfassungsmodul (30), das ausgelegt ist, um eine Kältemittelleckagemenge des Entfeuchters gemäß der Umgebungstemperatur und der Verdampferrohrtemperatur zu erfassen; und
ein Fehlererfassungsmodul (50), das so ausgelegt ist, dass es beurteilt, ob der Entfeuchter gemäß der Kältemittelleckagemenge einen Kältemittelfehler aufweist;
wobei
das Fehlererfassungsmodul (50) umfasst:
ein Lesemodul, das zum Lesen eines der Kältemittelleckagemenge entsprechenden Entfeuchtungsfähigkeitsparameters des Entfeuchters aus einer vorgegebenen Datenbank ausgelegt ist;
ein Entfeuchtungserfassungsmodul, das ausgelegt ist, um zu erfassen, ob der Entfeuchtungsfähigkeitsparameter innerhalb eines vorgegebenen Entfeuchtungsfähigkeitsbereichs liegt; und
ein erstes Fehlererfassungsuntermodul, das ausgelegt ist, um zu bestimmen, dass das Kältemittel des Entfeuchters fehlerhaft ist, unter der Bedingung, dass der Entfeuchtungsfähigkeitsparameter nicht innerhalb des vorgegebenen Entfeuchtungsfähigkeitsbereichs liegt.

7. Vorrichtung zur Steuerung eines Kältemittels nach Anspruch 6, wobei das Datenerfassungsmodul (30) umfasst:
ein Berechnungsmodul, das ausgelegt ist, um einen Unterschied zwischen der Umgebungstemperatur und der Verdampferrohrtemperatur zu berechnen; und
ein Erfassungsuntermodul, das ausgelegt ist, um die dem Unterschied entsprechende Kältemittelleckagemenge zu erhalten.

8. Vorrichtung zur Steuerung eines Kältemittels nach Anspruch 6, ferner umfassend:
ein Sammelmodul, das ausgelegt ist, um eine Abgastemperatur des Entfeuchters zu sammeln, unter der Bedingung, dass der Entfeuchtungsfähigkeitsparameter innerhalb des vorgegebenen Entfeuchtungsfähigkeitsbereichs liegt;
ein zweites Temperaturerfassungsmodul, das ausgelegt ist, um zu erfassen, ob die Abgastemperatur innerhalb eines vorgegebenen Temperaturbereichs liegt;
ein zweites Fehlererfassungsuntermodul, das ausgelegt ist, um zu bestimmen, dass das Kältemittel des Entfeuchters fehlerhaft ist, unter der Bedingung, dass die Abgastemperatur nicht innerhalb des vorgegebenen Temperaturbereichs liegt; und
ein drittes Fehlererfassungsuntermodul, das ausgelegt ist, um zu bestimmen, dass das Kältemittel des Entfeuchters normal ist, unter der Bedingung, dass die Abgastemperatur innerhalb des vorgegebenen Temperaturbereichs liegt.

9. Vorrichtung zur Steuerung eines Kältemittels nach Anspruch 6, wobei das erste Temperaturerfassungsmodul (10) umfasst:
ein erstes Aufzeichnungsmodul, das ausgelegt ist, um nach dem Starten des Entfeuchters einen Zeitgeber zu starten, und um die Startzeit des Entfeuchters aufzuzeichnen;
ein Zeiterfassungsmodul, das ausgelegt ist, um zu erfassen, ob die Startzeit innerhalb eines vorgegebenen Zeitbereichs liegt;
ein drittes Temperaturerfassungsmodul, das ausgelegt ist, um die Umgebungstemperatur und die Verdampferrohrtemperatur des Entfeuchters zu erfassen, unter der Bedingung, dass die Startzeit innerhalb des vorgegebenen Zeitbereichs liegt; und
ein zweites Aufzeichnungsmodul, das zur Daueraufzeichnung der Startzeit ausgelegt ist, unter der Bedingung, dass die Startzeit nicht innerhalb des vorgegebenen Zeitbereichs liegt.

10. Vorrichtung zur Steuerung eines Kältemittels nach einem der Ansprüche 6 bis 9, ferner umfassend:
ein Dauerbetrieb-Modul, das ausgelegt ist, um den Entfeuchter durch eine Steuereinheit derart zu steuern, dass er im Dauerbetrieb ist, ohne den Kältemittelfehler zu melden, unter der Bedingung, dass der Entfeuchter den Kältemittelfehler nicht aufweist; und
ein Alarm- und Stoppmodul, das ausgelegt ist, um durch die Steuereinheit einen Kältemittelfehleralarm auszugeben, und/oder um den Entfeuchter durch die Steuereinheit derart zu steuern, dass er stoppt, unter der Bedingung, dass der Entfeuchter den Kältemittelfehler aufweist.

## Revendications

1. Procédé de commande de réfrigérant pour un déshumidificateur, comprenant :
la détection d'une température ambiante et d'une température de tube d'évaporateur d'un déshumidificateur (S102) ;
l'obtention d'une quantité de fuite de réfrigérant du déshumidificateur en fonction de la température ambiante et de la température de tube d'évaporateur (S104) ; et
le fait de déterminer si le déshumidificateur présente un défaut de réfrigérant en fonction de la quantité de fuite de réfrigérant (S106) ;
dans lequel
le fait de déterminer si le déshumidificateur présente le défaut de réfrigérant en fonction de la quantité de fuite de réfrigérant comprend ;
la lecture d'un paramètre de capacité de déshumidification du déshumidificateur, correspondant à la quantité de fuite de réfrigérant, à partir d'une base de données prédéfinie ;
le fait de détecter si le paramètre de capacité de déshumidification est dans une plage de capacité de déshumidification prédéfinie ; et
le fait de déterminer que le réfrigérant du déshumidificateur est défectueux à condition que le paramètre de capacité de déshumidification ne se situe pas dans la plage de capacité de déshumidification prédéfinie.

2. Procédé de commande de réfrigérant selon la revendication 1, dans lequel l'obtention de la quantité de fuite de réfrigérant du déshumidificateur en fonction de la température ambiante et de la température de tube d'évaporateur (S104) comprends :
le calcul d'une différence entre la température ambiante et la température de tube d'évaporateur ; et
l'obtention de la quantité de fuite de réfrigérant correspondant à la différence.

3. Procédé de commande de réfrigérant selon la revendication 1, dans lequel après qu'il est détecté que le paramètre de capacité de déshumidification est dans la plage de capacité de déshumidification prédéfinie, le procédé comprend en outre:
la collecte d'une température d'échappement du déshumidificateur à condition que le paramètre de capacité de déshumidification se trouve dans plage de capacité de déshumidification prédéfinie ;
le fait de détecter si la température d'échappement est dans une plage de température prédéfinie ;
le fait de déterminer que le réfrigérant du déshumidificateur est défectueux à condition que la température d'échappement ne se situe pas dans la plage de température prédéfinie ; et
le fait de déterminer que le réfrigérant du déshumidificateur est normal à condition que la température d'échappement se situe dans la plage de température prédéfinie.

4. Procédé de commande de réfrigérant selon la revendication 1, dans lequel la détection de la température ambiante et de la température de tube d'évaporateur du déshumidificateur (S102) comprend :
le démarrage d'une minuterie après le démarrage du déshumidificateur, et l'enregistrement de l'heure de démarrage du déshumidificateur ;
le fait détecter si l'heure de démarrage se situe dans une plage de temps prédéfinie ;
la détection de la température ambiante et de la température de tube d'évaporateur du déshumidificateur à condition que l'heure de démarrage se situe dans la plage de temps prédéfinie ; et
l'enregistrement en continu de l'heure de démarrage à condition que l'heure de démarrage ne se situe pas dans la plage de temps prédéfinie.

5. Procédé de commande de réfrigérant selon l'une quelconque des revendications 1 à 4, dans lequel, après avoir déterminé si le déshumidificateur présente le défaut de réfrigérant en fonction de la quantité de fuite de réfrigérant, le procédé comprend en outre les étapes consistant à :
ne pas signaler, par un contrôleur, le défaut de réfrigérant et commander le déshumidificateur à fonctionner en permanence à condition que le déshumidificateur ne présente pas le défaut de réfrigérant ; et
donner, par le contrôleur, une alarme de défaut de réfrigérant, et / ou commander, par le contrôleur, le déshumidificateur à s'arrêter à condition que le déshumidificateur présente le défaut de réfrigérant.

6. Dispositif de commande de réfrigérant pour un déshumidificateur, comprenant :
un premier module de détection de température (10), configuré pour détecter une température ambiante et une température de tube d'évaporateur d'un déshumidificateur ;
un module d'obtention de données (30), configuré pour obtenir une quantité de fuite de réfrigérant du déshumidificateur en fonction de la température ambiante et de la température de tube d'évaporateur ; et
un module de détection de défaut (50), configuré pour déterminer si le déshumidificateur présente un défaut de réfrigérant en fonction de la quantité de fuite de réfrigérant ;
dans lequel
le module de détection de défaut (50) comprend :
un module de lecture, configuré pour lire un paramètre de capacité de déshumidification du déshumidificateur, correspondant à la quantité de fuite de réfrigérant, à partir d'une base de données prédéfinie ;
un module de détection de déshumidification, configuré pour détecter si le paramètre de capacité de déshumidification est dans une plage de capacité de déshumidification prédéfinie ; et
un premier sous-module d'obtention de défaut, configuré pour déterminer que le réfrigérant du déshumidificateur est défectueux à condition que le paramètre de capacité de déshumidification ne se situe pas dans la plage de capacité de déshumidification prédéfinie.

7. Dispositif de commande de réfrigérant selon la revendication 6, dans lequel le module d'obtention de données (30) comprend :
un module de calcul, configuré pour calculer une différence entre la température ambiante et la température de tube d'évaporateur ; et
un sous-module d'obtention, configuré pour obtenir la quantité de fuite de réfrigérant correspondant à la différence.

8. Dispositif de commande de réfrigérant selon la revendication 6, comprenant en outre :
un module de collecte, configuré pour collecter une température d'échappement du déshumidificateur à condition que le paramètre de capacité de déshumidification se trouve dans plage de capacité de déshumidification prédéfinie ;
un deuxième module de détection de température, configuré pour détecter si la température d'échappement est dans une plage de température prédéfinie,
un deuxième sous-module d'obtention de défaut, configuré pour déterminer que le réfrigérant du déshumidificateur est défectueux à condition que la température d'échappement ne se situe pas dans la plage de température prédéfinie ; et
un troisième sous-module d'obtention de défaut, configuré pour déterminer que le réfrigérant du déshumidificateur est normal à condition que la température d'échappement se situe dans la plage de température prédéfinie.

9. Dispositif de commande de réfrigérant selon la revendication 6, dans lequel le premier module de détection de température (10) comprend :
un premier module d'enregistrement, configuré pour démarrer une minuterie après le démarrage du déshumidificateur, et enregistrer l'heure de démarrage du déshumidificateur ;
un module de détection de temps, configuré pour détecter si l'heure de démarrage se situe dans une plage de temps prédéfinie ;
un troisième module de détection de température, configuré pour détecter la température ambiante et de la température de tube d'évaporateur du déshumidificateur à condition que l'heure de démarrage se situe dans la plage de temps prédéfinie ; et
un deuxième module d'enregistrement, configuré pour enregistrer de manière continue l'heure de démarrage à condition que l'heure de démarrage ne se situe pas dans la plage de temps prédéfinie.

10. Dispositif de commande de réfrigérant selon l'une quelconque des revendications 6 à 9, comprenant en outre :
un module à fonctionnement continu, configuré pour commander le déshumidificateur à fonctionner de manière continue par un contrôleur sans signaler le défaut de réfrigérant à condition que le déshumidificateur ne contienne pas le défaut de réfrigérant ; et
un module d'alarme et d'arrêt, configuré pour donner une alarme de défaut de réfrigérant par le contrôleur et / ou commander l'arrêt du déshumidificateur par le contrôleur, à condition que le déshumidificateur présente le défaut de réfrigérant.
